# EUROPÄISCHE PATENTSCHRIFT

(11) **EP 1 149 811 B1**
(45) Veröffentlichungstag und Bekanntmachung des Hinweises auf die Patenterteilung: **04.08.2004**
(21) Anmeldenummer: 01109933.0
(22) Anmeldetag: 24.04.2001
(51) Int. Cl.: C05F 17/02, C05F 9/04

(54) **Kompostumsetzmaschine**
Machine for shifting and turning compost
Appareil pour déplacer et retourner le compost

(30) Priorität: 28.04.2000 DE 20007673 U
(43) Veröffentlichungstag der Anmeldung: 31.10.2001
(73) Patentinhaber: Heissenberger & Pretzler Ges.m.b.H., 8130 Frohnleiten (AT)
(72) Erfinder: Pretzler, Rudolf, Dipl.-Ing., 8600 Bruck/Mur (AT); Heissenberger, Josef, Ing., 8045 Graz (AT)
(74) Vertreter: Lettau, Christoph, Dr.

(56) Entgegenhaltungen:
- EP-A- 0 358 986
- DE-A- 3 801 319
- DE-A- 4 335 201
- DE-A- 4 431 027
- DE-C- 4 236 138

## Beschreibung

Die Erfindung betrifft eine Umsetzmaschine für in Trapezmieten abgelegten Kompost nach dem Oberbegriff des Anspruchs 1.

Insbesondere bei der Kompostierung von strukturreichem, holzigem Material oder bei der Nachrotte von Bioabfall, insbesondere bei ungünstigen Platzverhältnissen, ist das Ablegen des zu kompostierenden Materials in Trapezmieten eine gute Alternative zur herkömmlichen Dreiecksmietenkompostierung. Es sind bereits Umsetzmaschinen zum Umsetzen von Trapezmieten bekannt. Bei diesen sind an einem Fahrgestell Fräswerkzeuge zur Aufnahme des Kompostes von einer Trapezmiete angeordnet. Weiterhin ist mindestens ein Förderband zur Übernahme des Kompostes und zur Ablage auf einer neuen Trapezmiete vorgesehen. Als Fräswerkzeuge werden bei bekannten Umsetzmaschinen beispielsweise langsam laufende Schneckenwalzen eingesetzt.

Beispielsweise aus der DE 38 01 319 A1 oder der DE 42 36 138 C1 sind bereits Kompostumsetzrnaschinen nach dem Oberbegriff des Anspruchs 1 bekannt. Beim Einsatz von Trapezmietenumsetzmaschinen ist es nun vorteilhaft, das Material schräg zum Materialstock der Trapezmieten abzunehmen, um das Herabrutschen der abgefrästen Wand zu verhindern.

Um dieses schräge Abfräsen der Trapezmiete zu erreichen, ist es notwendig, ein Fräswerkzeug zu entwickeln, welches dieser Anforderung gerecht wird.

Aufgabe der Erfindung ist es daher, eine Umsetzmaschine derart weiterzubilden, daß ihr Fräswerkzeug ein schräges Abfräsen der Trapezmiete derart ermöglicht, daß das Herabrutschen der abgefrästen Wand wirksam verhindert wird.

Die Aufgabe wird ausgehend von einer bekannten Umsetzmaschine gemäß dem Oberbegriff des Anspruchs 1 durch die Kombination mit den Merkmalen des kennzeichnenden Teils des Anspruchs 1 gelöst.

Nach dieser Lösung sind die Antriebsketten parallel und versetzt zueinander angeordnet und der Versatz der Antriebsketten ist zueinander einstellbar. Hierdurch ergibt sich eine parallelogrammartige Anordnung der Außenkontur des Kratzförderers.

Vorteilhafte Ausgestaltungen der Umsetzmaschine ergeben sich aus den an den Hauptanspruch angeschlossenen Unteransprüchen.

Beide Antriebskettenräder können über eine Gelenkwelle miteinander verbunden sein, wobei nur eines der Antriebskettenräder motorisch antreibbar ist. Durch die Gelenkwelle wird andererseits auf einer Seite ein glatter Abschluß realisiert und andererseits der Synchronlauf zwischen den beiden Kettenrädern gewährleistet.

Vorteilhaft können die Antriebsketten aus Rundgliederketten bestehen. An die Schürfleisten können seitlich Montageteile angesetzt sein, über die sie mit den Antriebsketten verbindbar sind. Dabei kann einerseits das Monatageteil aus einer Rundstahlgabel, die jeweils ein Kettenglied um 180 Grad umgreifen kann und gleichzeitig durch zwei Nachbarkettenglieder durchsteckbar ist, bestehen und einem Aufnahmeteil für die Rundstahlgabel. Hierdurch kann die jeweilige Schürfleiste beweglich an den Antriebsketten gelagert sein, wobei in den Bereichen der Kettenumlenkung entsprechende Winkelanpassungen zu den Antriebsketten möglich sind. Durch die hier vorgeschlagene Verbindung können sich die Rundstahlgabeln um die umschlungenen Kettenglieder drehen und in den durchsteckten Kettengliedem frei verschwenken. Darüber hinaus werden die Schürfleisten durch diese Befestigung gegen ein Kippen gesichert. Die Montage und Demontage der Schürfleisten kann durch einfaches Ein- bzw. Ausstecken der Rundstahlgabeln sehr einfach erfolgen.

Alternativ kann das Montageteil der Schürfleisten gabelförmig ausgebildet sein und über einen durch ein Kettenglied steckbaren Stift mit der Kette verbindbar sein. Eine Umsetzmaschine nach der vorliegenden Erfindung ermöglicht es mit dem erfindungsgemäß ausgestalteten Kratzförderer, gleichzeitig eine horizontale Ebene und die anschließende Wand mit einem Winkel der kleiner oder größer als 90 Grad ist, abzufräsen. Das abgefräste Material wird dann in bekannter Weise auf das Querförderband der Umsetzmaschine übergeben, das dieses wieder in einer Trapezmiete ablegt.

Weitere Einzelheiten und Vorteile der Erfindung werden anhand von in der Zeichnung dargestellten Ausführungsbeispielen näher erläutert. Es zeigen:
- Fig. 1: verschiedene Ansichten eines Fräswerkzeugs gemäß einer Ausführungsform der Erfindung,
- Fig. 2: eine teilweise geschnittene Ansicht eines Teils des Fräswerkzeugs gemäß Fig. 1,
- Fig. 3: verschiedene Ansichten einer in einem Fräswerkzeug gemäß Fig. 1 eingehängten Fräsleiste,
- Fig. 4: zwei Detaildarstellungen (Detail A und Detail B) gemäß einer ersten Ausführungsform, wie sie in Fig. 1 gezeigt ist und
- Fig. 5: die Details A und B in einer der Fig. 4 entsprechenden Darstellung für eine alternative Ausführungsform.

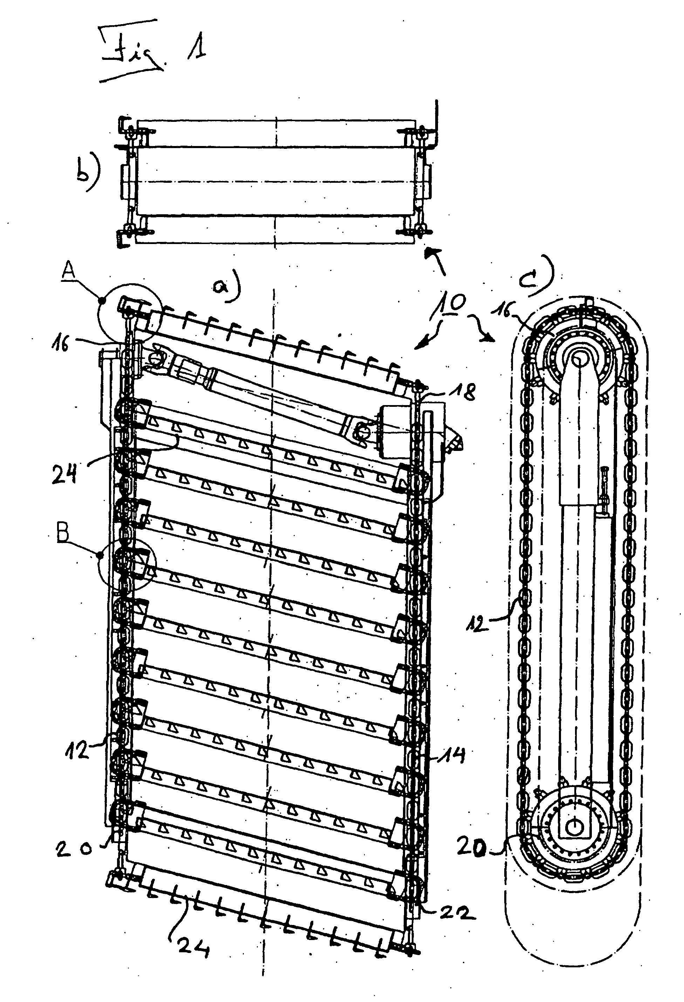

In Fig. 1 ist als Fräswerkzeug für eine sonst hier nicht näher dargestellte Umsetzmaschine ein Kratzförderer dargestellt. Ansonsten entspricht die Umsetzmaschine dem bekannten Stand der Technik, so daß die übrigen Teile der Umsetzmaschine hier aus Vereinfachungsgründen nicht weiter dargestellt sind. Der Kratzförderer 10 besteht aus zwei seitlich umlaufenden Antriebsketten 12 und 14, die jeweils um ein Antriebskettenrad 16 bzw. 18 und je ein Umlenkkettenrad 20 bzw. 22 umlaufen. In die Antriebsketten sind jeweils die Enden von quer zur Kettenbewegungsrichtung verlaufenden Schürfleisten 24 eingehängt.

Die Antriebsketten 12 und 14 verlaufen parallel und versetzt zueinander und bilden so zusammen mit den zwischen ihnen verlaufenden Schürfleisten ein Parallelogramm, wie dies in Fig. 1 dargestellt ist. Dabei ist der Versatz der Antriebsketten 12 und 14 zueinander einstellbar, so daß sich eine unterschiedliche Neigung bzw. Schrägführung des Kratzförderers 10 ergibt. Entsprechend dem Versatz der Ketten 12 und 14 zueinander kann also der Winkel der abzufräsenden Kompostmietenwand eingestellt werden.

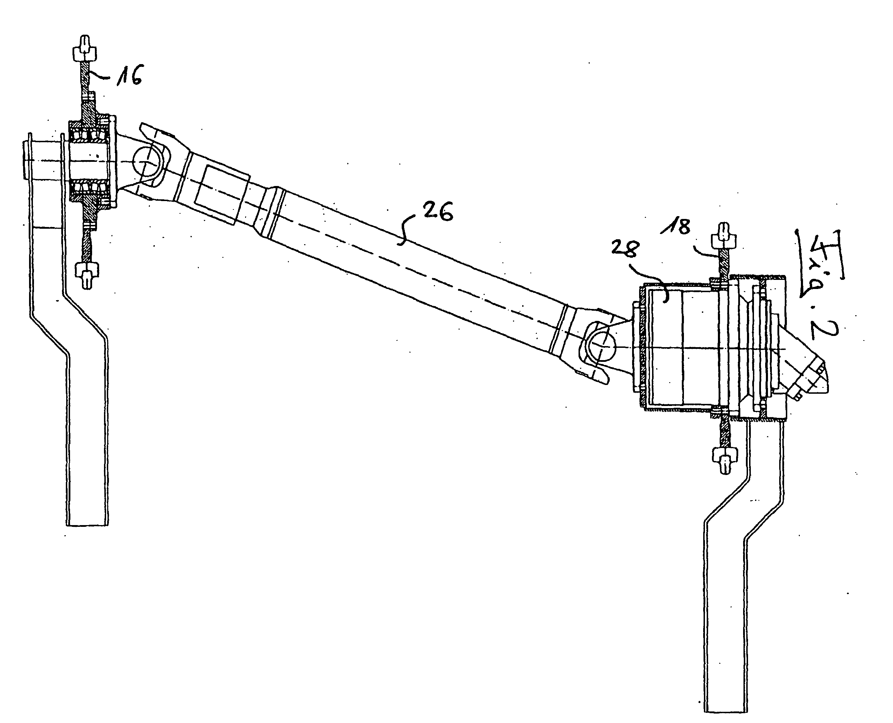

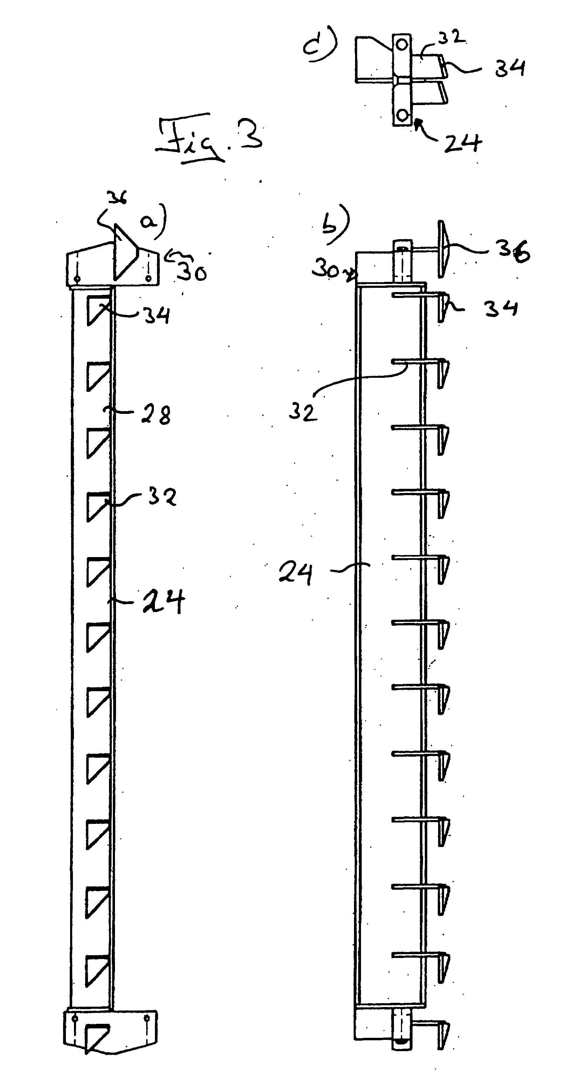

Wie insbesondere der Fig. 2 zu entnehmen sind, sind die Kettenräder 16 bzw. 18 über eine Gelenkwelle 26 miteinander verbunden. Daher braucht nur das Antriebskettenrad 18 motorisch angetrieben werden. Hierzu ist es mit einem Antriebsgetriebe 28 verbunden. Aufgrund dieser Konstruktion ist auf der Seite des Antriebskettenrads 16 ein glatter Anschluß auf der Seite realisiert, da hier kein weiteres Getriebe zum Antrieb des Antriebskettenrades 16 vorzusehen ist. Über die Gelenkwelle 26 wird ein Synchronlauf der Antriebsräder 16 und 18 gewährleistet, der notwendig ist, um die quer zur Kettenbewegungsrichtung verlaufenden Schürfleisten 24 anzutreiben. Der Aufbau der Schürfleisten 24 ergibt sich aus der Fig. 3. Diese bestehen aus dem langgestreckten Schürfleistengrundkörper 28 und jeweils an dessen Enden angeordneten Montageteilen 30. Die Montageteile dienen zur Montage mit den Antriebsketten 12 und14, wie dies in der Fig. 1 dargestellt ist. Auf dem Grundkörpem 28 und dem Montageteil 30 sind jeweils abstehende Zinken 32 vorgesehen, so daß die Schürfleiste insgesamt kammartig ausgebildet ist. Die Zinken 32 weisen jeweils an ihren freien Enden um 90 Grad abgewinkelte dreieckig bzw. trapezförmige Bleche 34 bzw. 36 auf.

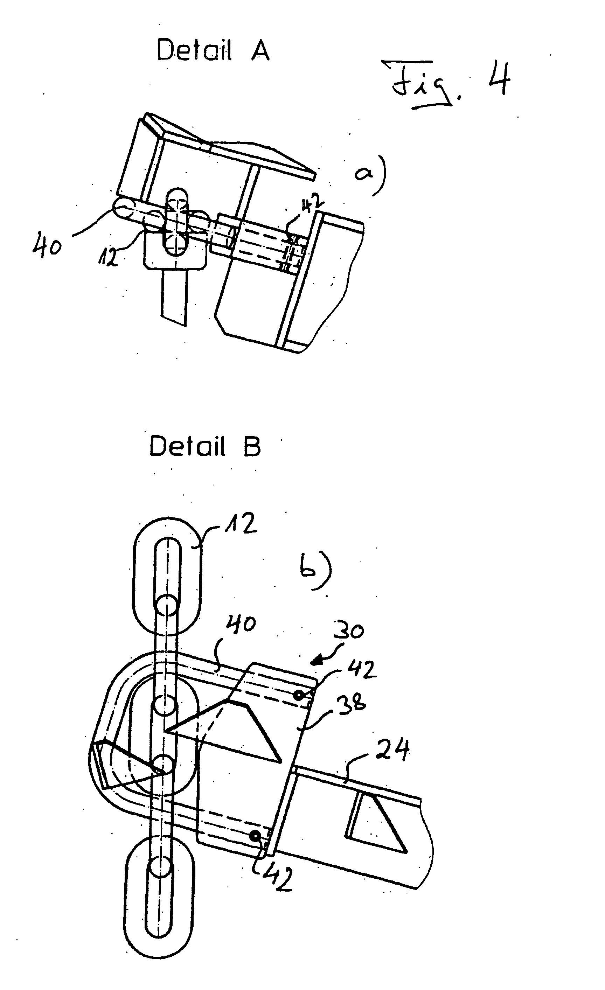

Anhand der Fig. 4 wird die Verbindung der Schürfleiste über die Montageteile 30 mit den Antriebsketten 12 bzw. 14 erläutert. Bei dem hier dargestellten Ausführungsbeispiel ist das Montageteil 30 aus einem an der Fräsleiste 24 angeschweißten Aufnahmeteil 38 gebildet, in das eine Rundstahlgabel 40 einsteckbar und über Sicherungsstifte 42 festlegbar ist. Die Rundstahlgabel 40 ist derart ausgebildet, daß sie jeweils ein Kettenglied um 180 Grand umgreifen kann, wie dies im Detail B der Fig. 4 gezeigt ist, und gleichzeitig durch zwei Nachbarkettenglieder durchsteckbar ist.

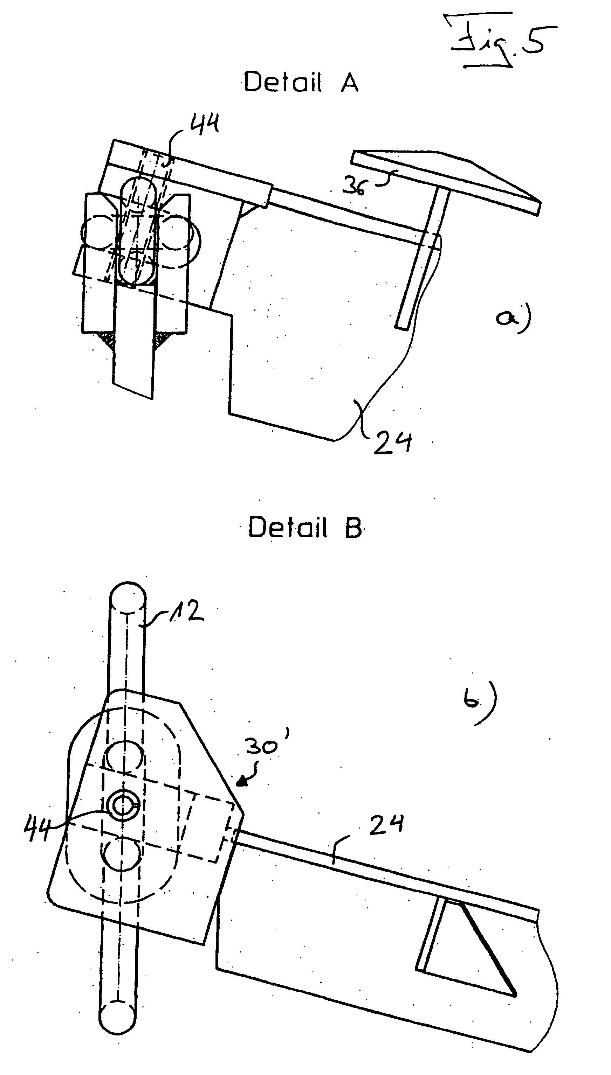

Die Fig. 5 zeigt eine andere Befestigungsmöglichkeit für die Schürfleisten in de Antriebsketten 12 und 14. Hier ist das Montageteil 30' gabelförmig ausgebildet und über einen durch ein Kettenglied steckbaren Stift 44, der im hier dargestellten Ausführungsbeispiel durch eine Spannhülse gebildet ist, festlegbar.

## Patentansprüche

1. Umsetzmaschine für in Trapezmieten abgelegten Kompost mit einem an einem Fahrgestell angeordneten Fräswerkzeug (10) zur Aufnahme des Kompostes von einer Trapezmiete und zumindest einem Förderband zur Übernahme des Kompostes und zur Ablage auf einer neuen Trapezmiete, wobei das Fräswerkzeug aus einem Kratzförderer (10) besteht, der seitlich von zwei um jeweils ein Antriebskettenrad (16, 18) und ein Umlenkkettenrad (20, 22) laufende Antriebsketten (12, 14) begrenzt wird, in die jeweils die Enden von quer zur Kettenbewegungsrichtung verlaufenden Schürfleisten (24) eingehängt sind,
**dadurch gekennzeichnet,**
**daß** die Antriebsketten (12,14) parallel und versetzt zueinander angeordnet sind und daß der Versatz der Antriebsketten (12,14) zueinander einstellbar ist.

2. Umsetzmaschine nach Anspruch 1, **dadurch gekennzeichnet, daß** beide Antriebskettenräder (16, 18) über eine Gelenkwelle (26) miteinander verbunden sind und daß nur eines der Antriebskettenräder (16, 18) motorisch antreibbar ist.

3. Umsetzmaschine nach einem der Ansprüche 1 oder 2, **dadurch gekennzeichnet, daß** an die Schürfleisten (24) seitlich Montageteile (30) angesetzt sind, über die sie mit den Antriebsketten (12,14) beweglich verbindbar sind.

4. Umsetzmaschine nach Anspruch 3, **dadurch gekennzeichnet, daß** das Montageteil (30) aus einer Rundstahlgabel (40), die jeweils ein als Rundkettenglied ausgebildetes Kettenglied um 180 Grad umgreifen kann und gleichzeitig durch zwei Nachbarkettenglieder durchsteckbar ist, und einem Aufnahmeteil (38) für die Rundstahlgabel (40) besteht.

## Revendications

1. Machine de transfert pour un compost stocké dans une meule trapézoïdale, avec un outil de fraisage (10) fixé à un châssis de véhicule, pour le logement du compost d'une meule trapézoïdale, et au moins un convoyeur à bande pour la prise en charge du compost et pour le déposer sur une nouvelle meule trapézoïdale, moyennant quoi l'outil de fraisage est constitué d'un transporteur à raclettes (10) limité latéralement par deux chaînes d'entraînement (12, 14), en rotation autour d'un pignon de chaîne d'entraînement (16, 18) et un pignon de chaîne de renvoi (20, 22), dans lesquelles sont suspendues les extrémités de bandes racleuses (24) perpendiculaires à la direction de déplacement des chaînes, **caractérisée en ce que** les chaînes d'entraînement (12, 14) sont parallèles et décalées entre elles et **en ce que** le décalage des chaînes d'entraînement (12, 14) entre elles est réglable.

2. Machine de transfert selon la revendication 1, **caractérisée en ce que** les deux pignons de chaîne d'entraînement (16, 18) sont reliés entre eux par un arbre de transmission (26) et **en ce que** seul un des pignons de chaîne d'entraînement (16, 18) peut être entraîné par un moteur.

3. Machine de transfert selon l'une des revendications 1 ou 2, **caractérisée en ce que**, sur les bandes racleuses (24), se trouvent des éléments de montage latéraux (30) à l'aide desquels elles peuvent être reliées de manière mobile aux chaînes d'entraînement (12, 14).

4. Machine de transfert selon la revendication 1, **caractérisée en ce que** l'élément de montage (30) est constitué d'une fourche d'acier arrondie (40) qui peut entourer un maillon de chaîne de forme arrondie sur 180° et qui peut être traversé en même temps par deux maillons de chaîne adjacents, et d'un élément de logement (38) pour la fourche d'acier arrondie (40).

## Claims

1. A machine for shifting and turning compost deposited in trapezoidal clamps, with a tillage tool (10) that is arranged on an undercarriage and serves for picking up the compost from a trapezoidal clamp, and with at least one conveyor belt for receiving and depositing the compost on a new trapezoidal clamp, wherein the tillage tool consists of a scraping conveyor (10) that is laterally limited by two driving chains (12, 14), wherein the driving chains respectively extend around a chain drive wheel (16, 18) and a chain deflection wheel (20, 22), and wherein the respective ends of stripping rails (24) that extend transverse to the moving direction of the chains are suspended in the two driving chains,
**characterized in that**
the driving chains (12, 14) are arranged parallel and offset relative to one another, and **in that** the relative offset between the driving chains (12, 14) is adjustable.

2. The machine for shirting and turning compost according to Claim 1, **characterized in that** both chain drive wheels (16, 18) are connected to one another by means of an articulated shaft (26), and **in that** only one of the chain drive wheels (16, 18) can be driven in a motorized fashion.

3. The machine for shifting and turning compost according to Claim 1 or 2, **characterized in that** mounting parts (30) are laterally attached to the stripping rails (24) in order to movably connect the stripping rails to the driving chains (12, 14).

4. The machine for shifting and turning compost according to Claim 3, **characterized in that** the mounting part (30) consists of a round steel stirrup (40) that is designed for respectively encompassing a chain link in the form of a round chain link by 180 degrees while simultaneously extending through two adjacent chain links, and of a receptacle part (38) for the round steel stirrup (40).
